# EUROPÄISCHE PATENTSCHRIFT

(11) **EP 1 168 712 B1**
(45) Veröffentlichungstag und Bekanntmachung des Hinweises auf die Patenterteilung: **13.09.2006**
(21) Anmeldenummer: 00112896.6
(22) Anmeldetag: 19.06.2000
(51) Int. Cl.: H04L 12/26

(54) **Dekodiervorrichtung für die Analyse von Kommunikationsprotokollen**
Decoding apparatus for analyzing communication protocols
Dispositif de décodage pour l'analyse de protocoles de communication

(43) Veröffentlichungstag der Anmeldung: 02.01.2002
(73) Patentinhaber: Tektronix Berlin GmbH & Co. KG, 13629 Berlin (DE)
(72) Erfinder: Bartsch, wolfgang, 14057 Berlin (DE)
(74) Vertreter: Schurack, Eduard F.

(56) Entgegenhaltungen:
- US-A- 5 805 571
- US-A- 6 000 041

## Beschreibung

Die vorliegende Erfindung betrifft eine Dekodiervorrichtung für die Analyse von Kommunikationsprotokollen, sowie ein korrespondierendes Verfahren zur Erstellung einer derartigen Dekodiervorrichtung.

In der Kommunikationstechnik läuft die Kommunikation zwischen mehreren Teilnehmern nach sogenannten Kommunikationsprotokollen ab, d. h. für die Kommunikation werden bestimmte Regeln vereinbart, an die sich die an der Kommunikation teilnehmenden Kommunikationseinrichtungen halten müssen. Zur Überwachung von Kommunikationsnetzen, insbesondere auch zum Testen von Kommunikationsnetzen nach Austausch eines Kommunikationsgeräts bzw. Erweiterung des Netzes um weitere Kommunikationsgeräte werden, um Betriebsstörungen zu verhindern, natürlich bereits vor der Inbetriebnahme unter Verwendung sogenannter Protokolltester Tests durchgeführt, die ein Funktionieren der Kommunikation sicherstellen sollen bzw. bei der Fehlersuche Unterstützung leisten sollen.

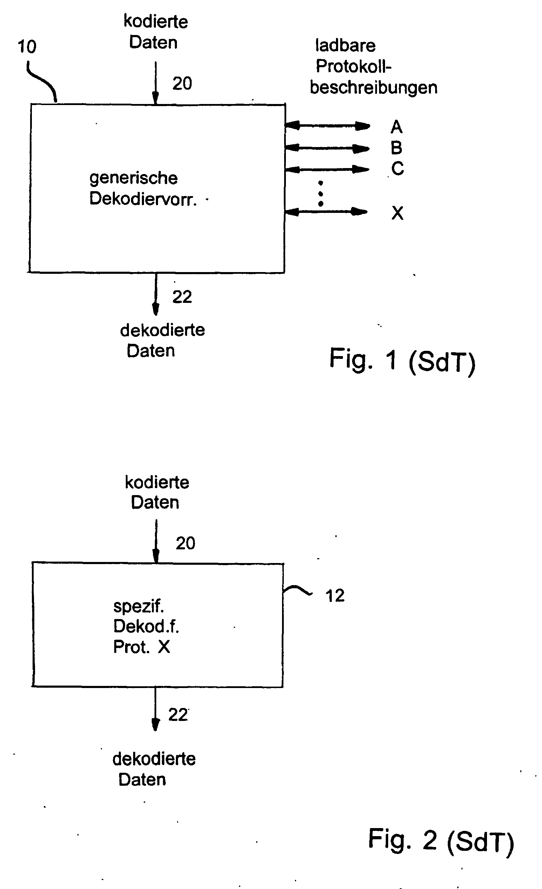

Derartige Protokolltester benötigen daher eine Dekodiervorrichtung, die es ihnen ermöglicht, die jeweils vereinbarten Kommunikationsregeln auf die mitgehörten oder als Endgerät empfangenen Daten anzuwenden, um diese zur weiteren Verarbeitung zu dekodieren. Aufgrund der sich häufig ändernden zu analysierenden Protokolle, insbesondere im Hinblick auf Geräte bzw. Hersteller spezifischer oder proprietärer Protokolle müssen derartige Dekodiervorrichtungen möglichst flexibel ausgebildet sein und werden daher gewöhnlich softwaremäßig realisiert. Besonders flexibel ist eine derartige Dekodiersoftware, wenn sie generisch, d. h. für viele Protokolle passend programmiert ist, wobei dann im Hinblick auf den speziellen Anwendungsfall die gerade benötigten Protokollbeschreibungen in die generische Dekodier-Software geladen werden. Bei der bekannten, in Fig. 1 dargestellten generischen Dekodiervorrichtung 10 werden Protokollbeschreibungen A bis X geladen. Anschließend werden am Eingang 20 kodierte Daten zugeführt, am Ausgang 22 dekodierte Daten zur weiteren Verarbeitung bereitgestellt.

Nachteilig daran ist, daß diese generische Dekodier-Software nicht so performant ist wie die spezifische, direkt an das vorliegende Protokoll bzw. die vorliegenden Protokolle angepasste Software. Insbesondere sind hierbei Nachteile im Hinblick auf die Laufzeit zu erwähnen, was insbesondere bei Echtzeitanwendungen unerwünscht ist. Dies liegt daran, daß die geladenen Protokollbeschreibungen von der generischen Dekodier-Software interpretiert werden müssen.

Eine derartige generische Dekodier-Software verfügt naturgemäß nur über einen begrenzten Befehlssatz, mit dem den zu ladenden Protokollen Rechnung getragen werden kann. Wenn nunmehr eine neue bisher nicht berücksichtigte Protokollbeschreibung in den generischen Dekodierer geladen werden soll, kann es dazu kommen, daß der im generischen Dekodierer bereitgestellte Befehlssatz keine Möglichkeit bereitstellt, bestimmte Regeln dieser neuen Protokollbeschreibung zum Ausdruck zu bringen. In diesem Fall ist es daher nötig, den generischen Dekodierer zu modifizieren, was in einem erheblichen Wartungs- und Änderungsaufwand resultiert. Dies liegt daran, daß durch stetiges Berücksichtigen neuer Protokolle die generische Dekodierer-Software äußerst komplex wird und daher Erweiterungen der Dekodierer-Software darin resultieren können, daß bisher funktionierende Teile plötzlich nicht mehr in der vorgesehenen Weise arbeiten.

Eine Alternative hierzu besteht darin, siehe hierzu Fig. 2, einen für das gerade zu analysierende Protokoll bzw. die gerade zu analysierenden Protokolle spezifischen Dekodierer 12 zu programmieren, der aufgrund dieser speziellen Anpassung sowohl schnell als auch übersichtlich analysieren kann. Problematisch hierbei ist, daß zu jedem neuen Protokoll, insbesondere sind hier zur erwähnen die verschiedensten Protokolldialekte, ein komplett neuer Software-Dekoder programmiert werden muß, was in großem Aufwand und daher in hohen Kosten resultiert.

Vereinfacht ausgedrückt ist ein generischer Dekodierer, in den Protokollbeschreibungen geladen werden können, zu vergleichen mit einem Prozessor, der zwar für keine Anwendung speziell ausgerichtet ist, aber alles, jedoch langsam bearbeiten kann. Ein spezifischer Dekodierer ist zu vergleichen mit einem Prozessor, der im Hinblick auf den speziellen Anwendungsfall designed wurde, d. h. das auszuführende Programm ist in Hardware gegossen.

Aus dem US-Patent 5,805,571 ist eine Dekodiervorrichtungbekannt, welche eine Mehrzahl von Prozessorabschnitten umfaßt. Diese können dynamisch jeweils so programmiert werden, dass ihnen eine große Anzahl von Protokollen zugeordnet ist. Durch die dynamische Programmierbarkeit können zusätzliche Testmöglichkeiten geschaffen werden.

Aus dem US-Patent 6,000,041 ist ein System zur Netzwerkanalyse bekannt. Es umfaßt ein einziges logisches Steuermodul, welches eine Vielzahl von Aufgaben wahrnehmen kann, jeweils auf der Grundlage von einer oder mehrerer einprogrammierter Protokollbeschreibungen, die in einem zugehörigen Speicher gespeichert sein können und diesem entnommen werden können. Durch die Verwendung von variablen Protokollbeschreibungen können vorhandene Protokolle geändert werden und das System für neue Protokolle eingerichtet werden.

Vor diesem Hintergrund liegt der vorliegenden Erfindung die Aufgabe zugrunde, eine Dekodiervorrichtung zur Verfügung zu stellen, die die Nachteile des Stands der Technik vermeidet, insbesondere möglichst schnell arbeitet, wartungsfreundich und übersichtlich ist.

Diese Aufgabe wird gemäß einem ersten Aspekt der Erfindung gelöst durch eine Dekodiervorrichtung gemäß Patentanspruch 1.

Gemäß einem weiteren Aspekt der Erfindung wird diese Aufgabe gelöst durch ein Verfahren zur Erstellung einer Dekodiervorrichtung gemäß Patentanspruch 5.

Erfindungsgemäß umfasst die generische Dekodiervorrichtung mindestens eine sogenannte Element-Funktion, die durch eine entsprechende Element-Funktion der mindestens einen speziellen Dekodiervorrichtung überlagerbar ist. Diese Elementfunktionen lassen sich am besten durch einen Vergleich beschreiben: Im generischen Dekodiereranteil ist der Aufruf eines Makros eingearbeitet, wobei die jeweilige spezifische Dekoder-Software, d. h. insbesondere der Element-Funktions-Anteil dieser spezifischen Dekodierersoftware bestimmt, wie dieses Makro zu interpretieren ist. Eine derartig ausgebildete erfindungsgemäße Dekodiervorrichtung ist somit noch universeller einsetzbar und auf den speziellen Anwendungsfall anpassbar.

Der Erfindung liegt der Gedanke zugrunde, daß die Dekodierer-Software dadurch schnell und wartungsfreundlich realisiert werden kann, daß der generische Dekodiereranteil auf eine bestimmte Größe festgelegt wird, die noch keine Laufzeiten in einem unerwüschten Bereich verursacht, und ergänzt wird um eine spezifische, im Hinblick auf das gerade zu analysierende Protokoll maßgebliche Dekodiervorrichtung. Zu berücksichtigen ist, daß lediglich der generische Dekodiereranteil die in ihm geladenen Protokollbeschreibungen interpretiert, dies jedoch nicht nötig ist bei der spezifischen Dekodiervorrichtung. Dies resultiert in einem geringem Arbeitsspeicherbedarf, da nur der/die jeweils benötigten spezifischen Dekodierer zum generischen Dekodierer hinzugeladen werden müssen. Der Änderungsaufwand in der generischen Dekodierer-Software für neue Protokolle entfällt vollständig, die Wartung der spezifischen Dekodierer kann getrennt von der übrigen Dekodierer-Software erfolgen.

Es sei ausdrücklich darauf hingewiesen, daß die erfindungsgemäße Lösung nicht in dem Sinne interpretiert werden kann, daß beispielsweise auch bei einem spezifischen Dekodierer, wie er aus dem Stand der Technik bekannt ist, ein Kern von Befehlen besteht, der dann um die jeweiligen speziellen, im Hinblick auf das gerade zu analysierende Protokoll benötigten Funktionen erweitert wird. Der Unterschied zur Erfindung besteht nämlich darin, daß im Stand der Technik ein einzelner Dekodierer entsteht, dessen Bestandteile nicht mehr getrennt werden können. D. h. beim Warten eines derartigen Dekodierers muß der gesamte Dekodierer durchgesehen werden und nicht nur der spezifische Anteil. Umgekehrt muß bei einer Änderung des Befehlssatzes des Standardbestandteils, des Kerns, eines aus dem Stand der Technik bekannten spezifischen Dekodierers ebenfalls der gesamte Dekodierer bearbeitet werden, d.h. seine beiden Bestandteile sind nicht unabhängig voneinander bearbeitbar.

Im Gegensatz hierzu sind die Bestandteile bei der erfindungsgemäßen Dekodiervorrichtung trennbar, d. h. separat bearbeitbar. Wird beispielsweise die Protokollbeschreibung X, die durch den spezifischen Dekodiereranteil berücksichtigt wird, durch eine Protokollbeschreibung X' ersetzt, so ist lediglich der spezifische Dekodiereranteil für die Protokollbeschreibung X zu bearbeiten bzw. durch die Protokollbeschreibung X' zu ersetzen.

In einer besonders bevorzugten Ausführungsform sind daher die generische Dekodiervorrichtung und die mindestens eine spezifische Dekodiervorrichtung zur Erzeugung der Dekodiervorrichtung reversibel verbindbar, insbesondere linkbar, d. h. daß die Trennung und der Neuaufbau bzw. die Änderung der Bestandteile erfolgen kann, ohne die spezifische und die generische Dekodiervorrichtung neu erzeugen zu müssen.

Im Hinblick auf das erfindungsgemäße Verfahren ist darauf hinzuweisen, daß die Verbindung der generischen mit der spezifischen Dekodier-Software bzw. die Überlagerung der Elementfunktionen des generischen Dekodierers durch Elementfunktionen des spezifischen Dekodierers durchgeführt wird, bevor die kodierten Daten zugeführt werden.

Weitere vorteilhafte Ausführungsformen ergeben sich aus den Unteransprüchen.

Ausführungsbeispiele der Erfindung werden im folgenden unter Hinweis auf die beigefügten Zeichnungen näher beschrieben. Es stellen dar:
Fig. 1 eine aus dem Stand der Technik bekannte generische Dekodiervorrichtung;
Fig. 2 eine aus dem Stand der Technik bekannte spezifische Dekodiervorrichtung für eine Protokollbeschreibung X;
Fig. 3 eine erste Ausführungsform einer erfindungsgemäßen Dekodiervorrichtung; und
Fig. 4 eine zweite Ausführungsform einer erfindungsgemäßen Dekodiervorrichtung.

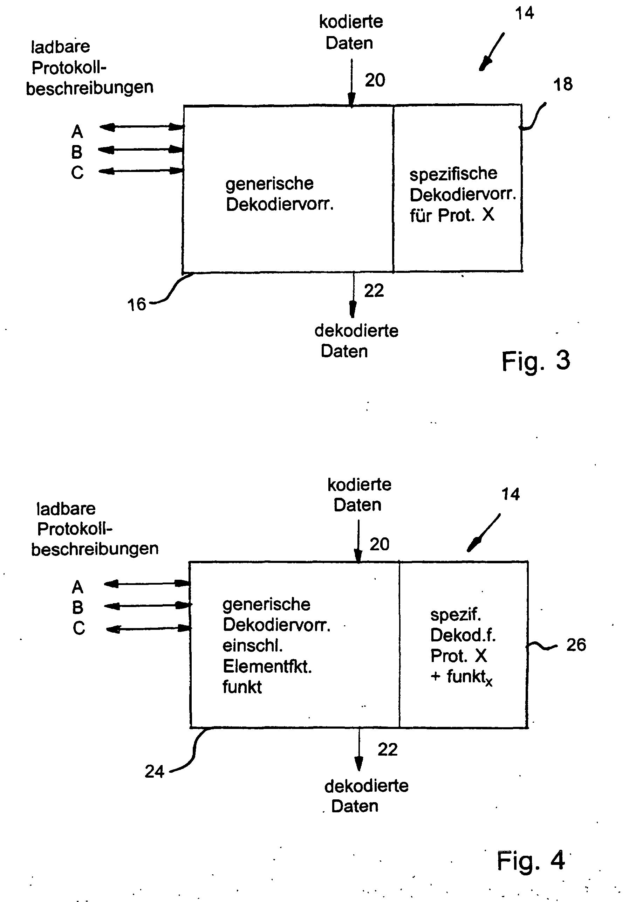

Die in Fig. 3 dargestellte erfindungsgemäße Dekodiervorrichtung 14 umfasst einen generischen Dekodiereranteil 16, in den eine begrenzte Anzahl von Protokollbeschreibungen A, B, C ladbar sind. Diese Protokollbeschreibungen werden im Betrieb der erfindungsgemäßen Dekodiervorrichtung 14 von der generischen Dekodiervorrichtung 16 interpretiert. Sie umfasst weiterhin eine spezifische Dekodiervorrichtung 18, die im Hinblick auf die gerade zu analysierende Protokollbeschreibung X angepasst ist, d. h. beim Betrieb der erfindungsgemäßen Dekodiervorrichtung findet in der spezifischen Dekodiervorrichtung keine Interpretation statt. Kodierte Daten werden am Eingang 20 der erfindungsgemäßen Dekodiervorrichtung 14 zugeführt, am Ausgang 22 werden dekodierte Daten bereitgestellt.

Beim Verbinden, insbesondere beim Linken, der generischen Dekodiervorrichtung 16 mit der spezifischen Dekodiervorrichtung 18 ist entscheidend, daß diese Verbindung reversibel ist, d. h. die einzelnen Bestandteile der erfindungsgemäßen Dekodiervorrichtung 14 können getrennt bearbeitet werden oder aktualisiert werden, ohne daß die spezifische oder generische Dekodiervorrichtung neu erzeugt werden müßte.

Bei der in Fig. 4 dargestellten Dekodiervorrichtung umfasst die generische Dekodiervorrichtung 24 sogenannte Element-Funktionen funktₓ, die von entsprechenden Element-Funktionen der spezifischen Dekodiervorrichtung 26 für das Protokoll X überlagert werden. Im Betrieb der erfindungsgemäßen Dekodiervorrichtung von Fig. 4 sind die überlagerten Element-Funktionen von der generischen Dekodiervorrichtung interpretierbar.

## Patentansprüche

1. Dekodiervorrichtung (14) für die Analyse von Kommunikationsprotokollen umfassend:
- eine generische Dekodiervorrichtung (16; 24), in die mindestens eine Protokollbeschreibung eines Kommunikationsprotokolls (A, B, C) ladbar ist, wobei die mindestens eine Protokollbeschreibung von der generischen Dekodiervorrichtung (16; 24) interpretierbar ist; und
- mindestens eine für eine bestimmte Protokollbeschreibung ausgelegte spezifische Dekodiervorrichtung (18; 26),
wobei die generische Dekodiervorrichtung (16; 24) mindestens eine Element-Funktion (funkt) umfasst, die durch eine entsprechende Element-Funktion (funktₓ) der mindestens einen spezifischen Dekodiervorrichtung (26) überlagerbar ist.

2. Dekodiervorrichtung nach Anspruch 1,
**dadurch gekennzeichnet,**
**dass** die generische Dekodiervorrichtung (16; 24) und die mindestens eine spezifische Dekodiervorrichtung (18; 26) zur Erzeugung der Dekodiervorrichtung (14) reversibel verbindbar, insbesondere linkbar, sind.

3. Dekodiervorrichtung nach Anspruch 1 oder 2,
**dadurch gekennzeichnet,**
**dass** die Überlagerung reversibel ist.

4. Dekodiervorrichtung nach einem der vorhergehenden Ansprüche,
**dadurch gekennzeichnet,**
**dass** die mindestens eine überlagerte Element-Funktion (funktₓ) von der generischen Dekodiervorrichtung (24) interpretierbar ist.

5. Verfahren zur Erstellung einer Dekodiervorrichtung,
**gekennzeichnet durch** die folgenden Schritte:
a) Bereitstellen einer generischen Dekodiervorrichtung (16; 24), in die mindestens eine Protokollbeschreibung (A, B, C) eines Kommunikationsprotokolls ladbar ist, wobei die mindestens eine Protokollbeschreibung von der generischen Dekodiervorrichtung (16; 24) interpretierbar ist;
b) Bereitstellen mindestens einer für eine bestimmte Protokollbeschreibung (X) ausgelegten spezifischen Dekodiervorrichtung (18; 26);
c) Reversibles Verbinden, insbesondere Linken, der generischen Dekodiervorrichtung (16; 24) und der mindestens einen spezifischen Dekodiervorrichtung (18; 26) zur Erzeugung der Dekodiervorrichtung (14),
wobei die generische Dekodiervorrichtung (24) mindestens eine Element-Funktion (funkt) umfaßt, wobei diese mindestens eine Element-Funktion (funkt) beim Verbinden der generischen Dekodiervorrichtung (24) mit der mindestens einen spezifischen Dekodiervorrichtung (26) **durch** eine entsprechende Element-Funktion (funktₓ) der mindestens einen spezifischen Dekodiervorrichtung (26) überlagert wird.

## Claims

1. Decoding device (14) for analysing communication protocols, comprising:
- a generic decoding device (16; 24), into which at least one protocol description of a communication protocol (A, B, C) can be loaded, the at least one protocol description being capable of being interpreted by the generic decoding device (16; 24); and
- at least one specific decoding device (18; 26) designed for a certain protocol description,
wherein the generic decoding device (16; 24) comprises at least one element function (funct), which can be overlaid by a corresponding element function (functₓ) of the at least one specific decoding device (26).

2. Decoding device according to claim 1,
**characterised in that**
the generic decoding device (16; 24) and the at least one specific decoding device (18; 26) can be reversibly connected, particularly linked for generating the decoding device (14).

3. Decoding device according to claim 1 or 2,
**characterised in that**
the overlaying is reversible.

4. Decoding device according to one of the preceeding claims,
**characterised in that**
the at least one overlaid element function (functₓ) can be interpreted by the generic decoding device (24).

5. Method for setting up a decoding device, **characterised by** the following steps:
a) Provisioning of a generic decoding device (16; 24), into which at least one protocol description (A, B, C) of a communication protocol can be loaded, the at least one protocol description being capable of being interpreted by the generic decoding device (16; 24);
b) Provisioning of at least one specific decoding device (18; 26), designed for a certain protocol description (X);
c) Reversible connecting, particularly linking, of the generic decoding device (16; 24) and the at least one specific decoding device (18; 26) for generating the decoding device (14),
wherein the generic decoding device (24) comprises at least one element function (funct), this at least one element function (funct) being overlaid by a corresponding element function (functₓ) of the at least one specific decoding device (26) during connection of the generic decoding device (24) with the at least one specific decoding device (26).

## Revendications

1. Dispositif de décodage (14) destiné à l'analyse de protocoles de communication, comprenant:
- un dispositif de décodage générique (16; 24) dans lequel au moins une description de protocole d'un protocole de communication (A, B, C) peut être chargée, l'au moins une description de protocole étant dépouillable par le dispositif de décodage générique (16; 24); et
- au moins un dispositif de décodage spécifique conçue pour une description de protocole précise (18; 26),
le dispositif de décodage générique (16; 24) comprenant au moins une fonction élément (funkt) susceptible d'être superposée par une fonction élément (funktₓ) correspondante de l'au moins un dispositif de décodage spécifique (26).

2. Dispositif de décodage selon la revendication 1, **caractérisé en ce que** le dispositif de décodage générique (16; 24) et l'au moins un dispositif de décodage spécifique (18; 26) sont susceptibles d'être reliés de manière réversible, notamment d'être mis en communication mutuelle par des liens, pour réaliser le dispositif de décodage.

3. Dispositif de décodage selon la revendication 1 ou 2, **caractérisé en ce que** la superposition est réversible.

4. Dispositif de décodage selon l'une des revendications précédentes, **caractérisé en ce que** l'au moins une fonction élément superposée (funktₓ) est dépouillable par le dispositif de décodage générique (24).

5. Procédé de réalisation d'un dispositif de décodage, **caractérisé par** les étapes suivantes:
a) Mise à disposition d'un dispositif de décodage générique (16; 24) dans lequel au moins une description de protocole (A, B, C) d'un protocole de communication peut être chargée, l'au moins une description de protocole étant dépouillable par le dispositif de décodage générique (16; 24);
b) mise à disposition d'au moins un dispositif de décodage spécifique (18; 26) conçu pour une description de protocole (X) précise;
c) mise en communication réversible, notamment par des liens, du dispositif de décodage générique (16; 24) avec l'au moins un dispositif de décodage spécifique (18; 26) pour réaliser le dispositif de décodage,
le dispositif de décodage générique (24) comportant au moins une fonction élément (funkt), ladite au moins une fonction élément (funkt) étant supérposée, lors de la mise en communication du dispositif de décodage générique (24) avec l'au moins un dispositif de décodage spécifique (26), par une fonction élément (funktₓ) correspondante de l'au moins un dispositif de décodage spécifique (26).
